# EUROPEAN PATENT APPLICATION

(11) **EP 0 732 375 A2**
(43) Date of publication of application: **18.09.1996**
(21) Application number: 96301689.4
(22) Date of filing: 12.03.1996
(51) Int. Cl.: C08L 91/00, C08L 53/00, C09K 3/00

(54) **Hydrophobic compositions**

(30) Priority: 17.03.1995 GB 9505364
(71) Applicant: Dussek Campbell Limited, Crayford, Kent DA1 4QJ (GB)
(72) Inventor: Moore, Simon, Crayford, Kent DA1 4QJ (GB)
(74) Representative: Lewis, Pauline Therese

(57) **Abstract**

A hydrophobic composition comprising 80-95% by weight of a hydrocarbon oil, 3-7.5% by weight of a styrene- (ethylene-propylene) di-block copolymer, 1-6% by weight of a linear low density polyethylene and 1-8% by weight of a polyethylene wax. The hydrophobic composition exhibits excellent anti-slump properties and no oil separation. The hydrophobic composition may be used as a filler for sheathed cables.

## Description

This invention relates to hydrophobic compositions and is particularly concerned with hydrophobic compositions that are useful as cable filling materials.

It is well known to provide a hydrophobic gel-type composition to fill any interstices between the components of a multi-component cable, e.g. a telephone wire cable or between the fibres of an optical fibre cable. Such compositions are applied by pumping them transversely to, for example, bundles of the wires as the bundles are brought together and passed through a die plate or pipe. After the application of the hydrophobic composition, an outer sheath is applied to the bundles of wires by conventional means.

By filling the cable in this manner, it is intended to prevent water which may enter beneath the sheath from tracking along the length of the cable or from causing electrical problems. Moreover, water within the sheath may cause serious problems if it freezes and the ice crystals so formed exert pressure, e.g. on the tubes of fibres in an optical fibre cable.

It will be appreciated that a composition for this purpose should have a number of desirable properties. It must, of course, be hydrophobic. It may be thixotropic so that it is relatively easy to apply under shear conditions but will revert to a more viscous, solid, e.g. waxy material after application. (However, thixotropy is not essential as many gels are applied in a hot molten state and others are soft enough to be pumped cold.). The applied composition should not be liable to "slumping" at elevated temperatures, i.e. it should be capable of maintaining its position even in vertical runs of cable so that it does not "slump" downwards. Moreover, the constituents of the composition, especially the oily fractions, should not separate out during application nor over long periods of use.

Clearly, a thicker and harder, more waxy composition may be less liable to slump than a thinner, less viscous material but may be more difficult to apply without heating and require higher application temperatures and pressures. Softer compounds may be applied cold but may be more prone to slumping.

Conventional optical fibre cable filling compositions are soft hydrophobic, thixotropic gels based on hydrocarbon oils and inert fillers. Conventional wire cable filling compositions are blends of waxes, oils and polymers, without inert fillers.

It is an object of the present invention to provide an improved hydrophobic composition having good anti-slump and anti-oil separation properties whilst being sufficiently soft to be applied to cables at ambient temperatures.

Accordingly in one aspect the invention provides a hydrophobic, composition comprising a hydrocarbon oil, a styrene- (ethylene-propylene) di-block copolymer, a linear low density polyethylene and a polyethylene wax.

As indicated above, the composition of the invention is particularly intended for use as a cable filler and in another aspect the invention provides a sheathed cable containing as a filler a composition of the immediately preceding paragraph.

The preferred proportions by weight of the constituents of the composition are:
- hydrocarbon oil: - 80 to 95%, preferably 81.5 to 94%
- di-block copolymer:
- - 3 to 7.5% , preferably 3.5 to 6.5%
- linear low density polyethylene: - 1 to 6%, preferably 2 to 5%
- polyethylene wax: - 1 to 8%, preferably 2 to 7%.

The composition may, if desired, contain minor amounts of other constituents, e.g. anti-oxidants or copper pacifying agents

The hydrocarbon oil may be a synthetic or mineral hydrocarbon oil. It may be, for example, a paraffinic, naphthenic or polyisobutylene oil. It may be a mixture of oils, if desired.

Preferably the oil should have viscosity of not less than 2 centistokes at 100°C and not more than 40 centistokes at 100°C.

The di-block copolymer of styrene and ethylene-propylene preferably contains from 25 to 45% by weight of styrene. It may be, for example, a KRATON di-block copolymer from Shell e.g. G1701 or G1702, Shellvis 40 or Shellvis 50.

The linear low density polyethylene preferably has a melt flow index in the range 10 to 40. It may be, for example, LL1004 supplied by Exxon.

The polyethylene wax should preferably have a melting point of at least 115°C and especially at least 125°C. The wax should be of hardness to give a cone penetration value for the composition of an acceptable level for the industry in which the composition is to be used. The "cone penetration" test is described in The Institute of Petroleum 1P50 test. Typically useful values are in the range 80 to 120 dmm. at 25°C.

Where an antioxidant is used, the amount may be adjusted to meet the end use requirements but may typically be from 0.1 to 2% by weight.

The ingredients of the compositions of the invention may be mixed by any convenient means. For example, a high shear mixer may be used to blend the oil, the di-block copolymer and the low density polyethylene together and the wax may be added later but this is not essential and a different order of mixing may be employed, if required.

Compositions of the invention have been found to possess an excellent balance of properties for use as cable fillers. They are soft and maybe shear thinning when pumped, allowing easy filling of cables but they have excellent anti-slump properties and exhibit no oil separation after extremes of mechanical shearing and at elevated temperatures. Thus the compositions may, for example, exhibit no slump or separation after 24 hours at 80°C in the IEC "tombstone" test when previously subjected to 100 return strokes of the greaseworker as per ASTM D217/IP50. They remain adequately soft over a wide range of temperatures and are of low volatility at elevated temperatures. They have a wide service temperature range, including up to 80°C, or wider. Thus they provide an improved balance of these important properties in comparison with conventional anti-slump compositions which have to be formulated to be harder/more viscous to minimise slump and oil separation.

Specific embodiments of the invention are illustrated in the accompanying Example.

### Example

A cable-filling, hydrophobic, thixotropic composition was made to the following formulation, all parts being by weight:

| | Parts |
|---|---|
| ¹ 500 solvent neutral oil | 90 |
| ²Kraton G1702 | 4 |
| ³ LL1004 | 2 |
| ⁴ PE 190 | 4 |

| | |
|---|---|
| ¹ A paraffinic mineral oil having a typical kinematic viscosity of 10.8 cSt at 100°C and supplied by BP. | |
| ² di-block copolymer supplied by Shell. | |
| ³ linear low density polyethylene supplied by Exxon and having a typical melt flow index of 28. | |
| ⁴ Polyethylene wax supplied by Hoechst and having a typical melting point of 135°C, a relative density of 0.96 and a viscosity of 25000 mPaS at 140°C (DIN 51562). | |

The composition was of soft, waxy gel consistency. It was subjected to 100 return strokes of a standard greaseworker, as described in the IP50/ASTM D217 test, and was found to have excellent anti-slump properties and no oil separation by IEC 811-5-1 "tombstone" test at 80°C.

## Claims

1. A hydrophobic composition comprising a hydrocarbon oil, a styrene- (ethylene-propylene) di-block copolymer, a linear low density polyethylene and a polyethylene wax.

2. The hydrophobic composition claimed in claim 1, comprising 80-95% by weight hydrocarbon oil, 3-7.5% by weight styrene- (ethylene-propylene) di-block copolymer, 1-6% by weight linear low density polyethylene and 1-8% by weight polyethylene wax.

3. The hydrophobic composition claimed in claim 2, comprising 81.5-94% by weight hydrocarbon oil, 3.5-6.5% by weight styrene- (ethylene-propylene) di-block copolymer, 2-5% by weight linear low density polyethylene and 2-7% by weight polyethylene wax.

4. The hydrophobic composition claimed in any one of the preceding claims, wherein the hydrocarbon oil has a viscosity of not less than 2 centistokes and not more than 40 centistokes at 100°C.

5. The hydrophobic composition claimed in any one of the preceding claims, wherein the di-block copolymer comprises from 25 to 45% by weight of styrene.

6. The hydrophobic composition claimed in any one of the preceding claims, wherein the linear low density polyethylene has a melt flow index of 10 to 40.

7. The hydrophobic composition claimed in any one of the preceding claims, wherein the polyethylene wax has a melting point of at least 115°C, preferably at least 125°C.

8. Use of the hydrophobic composition claimed in any one of claims 1-7 as a cable filler.

9. A sheathed cable comprising the hydrophobic composition defined in any one of claims 1-7 as a filler.
